(19) Europäisches Patentamt
European Patent Office
Office européen des brevets

(11) EP 4 481 489 A1

(12) EUROPÄISCHE PATENTANMELDUNG

(43) Veröffentlichungstag:
25.12.2024 Patentblatt 2024/52

(21) Anmeldenummer: 23181272.8

(22) Anmeldetag: 23.06.2023

(51) Internationale Patentklassifikation (IPC):
G02F 1/35 (2006.01)          G02F 1/355 (2006.01)

(52) Gemeinsame Patentklassifikation (CPC):
G02F 1/3548; G02F 1/3505; G02F 1/3509;
G02F 1/353; G02F 1/3551; G02F 1/3534

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Fraunhofer-Gesellschaft zur
Förderung
der angewandten Forschung e.V.
80686 München (DE)

(72) Erfinder:
• Kießling, Jens, Dr.
79110 Freiburg (DE)
• Trendle, Tobias
79110 Freiburg (DE)

(74) Vertreter: WSL Patentanwälte Partnerschaft mbB
Kaiser-Friedrich-Ring 98
65185 Wiesbaden (DE)

(54) DOPPELPASS-FREQUENZUMWANDLUNG MIT PHASENKOMPENSATION

(57) Die vorliegende Erfindung betrifft eine Vorrichtung zur Konversion von elektromagnetischer Eingangsstrahlung mit einer ersten Frequenz in elektromagnetische Ausgangsstrahlung mit einer von der ersten Frequenz verschiedenen zweiten Frequenz, wobei die Vorrichtung aufweist: einen Einkoppler, einen Kristallhalter, einen an dem Kristallhalter aufgenommenen nichtlinearoptischen Kristall, wobei der nichtlinear-optische Kristall eine erste Domäne und eine Enddomäne aufweist, wobei die spontane Polarisierung des Kristalls in der ersten Domäne eine erste Orientierung und in der Enddomäne eine zweite Orientierung aufweist, wobei die erste Orientierung und die zweite Orientierung voneinander verschieden sind, und wobei der Kristall eine erste Endfacette und eine zweite Endfacette aufweist, wobei die Enddomäne von der zweiten Endfacette begrenzt ist und wobei die Enddomäne keilförmig mit einem Keilwinkel ausgebildet ist, und einen Rückreflektor, wobei der Einkoppler derart ausgestaltet und angeordnet ist, dass in einem Betrieb der Vorrichtung die Eingangsstrahlung von dem Einkoppler durch die erste Endfacette in den Kristall eingestrahlt wird, so dass die Eingangsstrahlung durch den Kristall transmittiert wird und durch die zweite Endfacette aus dem Kristall austritt, wobei der Kristall derart ausgestaltet und angeordnet ist, dass ein Anteil der Eingangsstrahlung in dem Betrieb der Vorrichtung in die Ausgangsstrahlung umgewandelt wird, wobei der Rückreflektor derart ausgestaltet und angeordnet ist, dass der Rückreflektor in dem Betrieb der Vorrichtung die aus dem Kristall durch die zweite Endfacette austretende Eingangsstrahlung und die aus dem Kristall durch die zweite Endfacette austretende Ausgangsstrahlung durch die zweite Endfacette in den Kristall zurückreflektiert, so dass die Eingangsstrahlung und die Ausgangsstrahlung durch den Kristall transmittiert werden und durch die erste Endfacette aus dem Kristall austreten. Erfindungsgemäß ist der Kristallhalter derart ausgestaltet, dass der Kristallhalter mit dem Kristall um eine Schwenkachse schwenkbar ist, wobei die Enddomäne in zumindest einer Ebene senkrecht zu der Schwenkachse keilförmig mit dem Keilwinkel ist.

Fig. 1

**Beschreibung**

Die vorliegende Erfindung betrifft eine Vorrichtung zur Konversion von elektromagnetischer Eingangsstrahlung mit einer ersten Frequenz in elektromagnetische Ausgangsstrahlung mit einer von der ersten Frequenz verschiedenen zweiten Frequenz, wobei die Vorrichtung aufweist: einen Einkoppler, einen Kristallhalter, einen an dem Kristallhalter aufgenommenen nichtlinear-optischen Kristall, wobei der nichtlinear-optische Kristall eine erste Domäne und eine Enddomäne aufweist, wobei die spontane Polarisierung des Kristalls in der ersten Domäne eine erste Orientierung und in der Enddomäne eine zweite Orientierung aufweist, wobei die erste Orientierung und die zweite Orientierung voneinander verschieden sind, und wobei der Kristall eine erste Endfacette und eine zweite Endfacette aufweist, wobei die Enddomäne von der zweiten Endfacette begrenzt ist und wobei die Enddomäne keilförmig mit einem Keilwinkel ausgebildet ist, und einen Rückreflektor, wobei der Einkoppler derart ausgestaltet und angeordnet ist, dass in einem Betrieb der Vorrichtung die Eingangsstrahlung von dem Einkoppler durch die erste Endfacette in den Kristall eingestrahlt wird, sodass die Eingangsstrahlung durch den Kristall transmittiert wird und durch die zweite Endfacette aus dem Kristall austritt, wobei der Kristall derart ausgestaltet und angeordnet ist, dass ein Anteil der Eingangsstrahlung in dem Betrieb der Vorrichtung in die Ausgangsstrahlung umgewandelt wird, wobei der Rückreflektor derart ausgestaltet und angeordnet ist, dass der Rückreflektor in dem Betrieb der Vorrichtung die aus dem Kristall durch die zweite Endfacette austretende Eingangsstrahlung und die aus dem Kristall durch die zweite Endfacette austretende Ausgangsstrahlung durch die zweite Endfacette in den Kristall zurückreflektiert, sodass die Eingangsstrahlung und die Ausgangsstrahlung durch den Kristall transmittiert werden und durch die erste Endfacette aus dem Kristall austreten.

Die vorliegende Erfindung betrifft zudem ein Verfahren zum Einstellen einer Konversionseffizienz einer Konversion von elektromagnetischer Eingangsstrahlung mit einer ersten Frequenz in elektromagnetische Ausgangsstrahlung mit einer vor der ersten Frequenz verschiedenen zweiten Frequenz in einem nichtlinear-optischen Kristall, wobei der nichtlinear-optische Kristall eine erste Domäne und eine Enddomäne aufweist, wobei die spontane Polarisierung des Kristalls in der ersten Domäne eine erste Orientierung und in der Enddomäne eine zweite Orientierung aufweist, wobei die erste Orientierung und die zweite Orientierung voneinander verschieden sind, und wobei der Kristall eine erste Endfacette und eine zweite Endfacette aufweist, wobei die Enddomäne von der zweiten Endfacette begrenzt ist und wobei die Enddomäne keilförmig mit einem Keilwinkel ausgebildet ist und wobei das Verfahren die Schritte aufweist: Einkoppeln der Eingangsstrahlung in den Kristall, so dass die Eingangsstrahlung durch die erste Endfacette in den Kristall eingestrahlt wird, die Eingangsstrahlung durch den Kristall transmittiert wird und durch die zweite Endfacette aus dem Kristall austritt, Umwandeln eines Anteils der Eingangsstrahlung in die Ausgangsstrahlung und Zurückreflektieren der aus dem Kristall durch die zweite Endfacette austretenden Eingangsstrahlung und Ausgangsstrahlung durch die zweite Endfacette in den Kristall, so dass die Eingangsstrahlung und die Ausgangsstrahlung durch den Kristall transmittiert werden und durch die erste Endfacette aus dem Kristall austreten.

Aus dem Stand der Technik ist es bekannt, nichtlinear-optische Kristalle zur Frequenzkonversion zu verwenden. Nichtlinear-optische Kristalle zeigen in der Regel eine hohe Nichtlinearität bei der Wechselwirkung mit elektromagnetischen Feldern. Bei nichtlinear-optischen Prozessen werden ein oder mehrere elektromagnetische Felder durch einen Kristall mit nichtlinearer Suszeptibilität geleitet, um ein oder mehrere neue elektromagnetische Felder mit einer anderen Frequenz zu erzeugen. Damit dies effizient gelingen kann, müssen die generierten Elementarwellen in Phase sein, d.h. eine feste Beziehung zwischen ihren Oszillationen aufweisen. Nur dann tritt keine destruktive Interferenz auf und die Effizienz der Umwandlung bleibt hoch.

Auch in Medien, die diese Phasenanpassungsbedingung nicht erfüllen, ist es möglich, eine destruktive Interferenz wirksam zu vermeiden, indem die Orientierung der spontanen Polarisierung in verschiedenen Abschnitten des nichtlinearen Mediums verschieden ausgerichtet oder umgekehrt wird.

Viele Kristalle, insbesondere ferroelektrische Kristalle, weisen den Vorteil auf, dass sie sich abschnittsweise polen bzw. ausgehend von einer vorgegebenen homogenen Polung des Mediums abschnittsweise umpolen lassen. Diese Möglichkeit zur abschnittsweisen Ausbildung von Domänen bzw. Volumensegmenten (beide Begriffe werden in dieser Anmeldung gleichbedeutend verwendet) mit voneinander verschiedener, vorzugsweise entgegengesetzter, Orientierung ihrer spontanen Polarisierung macht solche Kristalle zur Quasi-Phasenanpassung geeignet. Die Phasen der erzeugten Elementarwellen aus einem umgepolten Volumensegment erfahren einen Phasensprung gegenüber erzeugten Elementarwellen aus einem nicht umgepolten Volumensegment. So ist ein konstruktives Aufsummieren der elektromagnetischen Felder auch über lange Ausbreitungsstrecken möglich.

Um die Effizienz der Frequenzkonversion in einem solchen nichtlinear-optischen Kristall mit Quasi-Phasenanpassung weiter zu steigern, wird das Licht zumindest zweifach durch den gleichen Kristall geleitet. Auch bei dem zweiten Durchgang der Strahlung durch den Kristall müssen sich die generierten elektromagnetischen Felder wieder konstruktiv aufsummieren. Die generierten Elementarwellen beim zweiten Durchgang müssen in Phase mit den generierten Elementarwellen des ersten Durchgangs sein.

Letzteres ist aber für den zweiten Durchgang typischerweise ohne weitere Maßnahmen nicht gegeben. Der Rückreflektor, welcher die Strahlung zurück in den Kristall reflektiert, die Luft oder auch der Kristall selbst weisen Dispersionen auf, welche die im zweiten Durchgang generierten Elementarwellen außer Phase zu den im ersten Durchgang generierten Elementarwellen bringen.

Aus dem Stand der Technik ist es daher bekannt, eine Platte zur Phasenkompensation zwischen dem Kristall und dem Rückreflektor anzuordnen. Eine solche Platte zur Phasenkompensation muss, wenn sie einstellbar sein soll, typischerweise eine antireflexbeschichtete Keilplatte sein. Eine solche Keilplatte ist dennoch mit Leistungsverlusten behaftet und ein zusätzliches, die Kosten erhöhendes Element im Aufbau.

Dem gegenüber ist es Aufgabe der vorliegenden Erfindung, eine Vorrichtung und ein Verfahren bereitzustellen, welche die zumindest ungefähre Einhaltung der Phasenanpassungsbedingung auf dem Hinweg und dem Rückweg der elektromagnetischen Eingangsstrahlung durch den Kristall auf einfache, einstellbare Weise gewährleisten.

Zumindest eine der zuvor genannten Aufgaben wird durch eine Vorrichtung gemäß dem beigefügten unabhängigen Anspruch 1 gelöst. Dazu ist der Kristallhalter der Vorrichtung der eingangs genannten Art derart ausgestaltet, dass der Kristallhalter mit dem Kristall um eine Schwenkachse schwenkbar ist und die Enddomäne in zumindest einer Ebene senkrecht zu der Schwenkachse keilförmig mit dem Keilwinkel ist.

Es ist die der vorliegenden Erfindung zu Grunde liegende Idee, den nichtlinear-optischen Kristall auf seiner zu dem Rückreflektor hinzeigenden Seite mit einer keilförmigen letzten Domäne zu versehen. Diese letzte Domäne wird in der vorliegenden Anmeldung als Enddomäne bezeichnet. Durch Schwenken des Kristalls um die Schwenkachse wird die geometrische Weglänge und damit die optische Weglänge der elektromagnetischen Strahlung in der Enddomäne eingestellt. Dabei ist der optimale Schwenkwinkel derjenige Winkel, bei dem die auf dem Hinweg und auf dem Rückweg generierten Elementarwellen der elektromagnetischen Strahlung in Phase sind und sich die Elementarwellen daher konstruktiv zur Erreichung einer optimierten Konversionseffizienz überlagern.

Es versteht sich, dass in dem Betrieb der Vorrichtung die Eingangsstrahlung und die Ausgangsstrahlung in derjenigen Ebene senkrecht zu der Schwenkachse liegen, in welcher der Kristall keilförmig ist.

Die Anpassung der optischen Weglänge der Strahlung in dem Kristall durch ein Verschwenken um die Schwenkachse erfordert eine deutlich geringere Breite des Kristalls als dies beispielsweise bei einer Translationsbewegung des Kristalls der Fall wäre.

Es sind keine zusätzlichen Elemente, die gegebenenfalls verlustbehaftet sind, im Strahlengang notwendig. Die Phasenkompensation für Hin- und Rückweg kann allein durch den ohnehin notwendigen Kristall bereitgestellt werden.

Reflexe, die gegebenenfalls den Aufbau oder seine Quelle stören, können in einer Ausführungsform vermieden werden, da die Endfacetten in allen Schwenkpositionen unter nicht senkrechtem Einfall angeordnet werden können.

Erfindungsgemäß ist die Enddomäne von der zweiten Endfacette begrenzt, wobei die Enddomäne in zumindest einer Ebene senkrecht zu der Schwenkachse keilförmig mit einem Keilwinkel ausgebildet ist. Es versteht sich, dass der Keilwinkel von 0° verschieden ist.

In einer Ausführungsform der Erfindung ist die Enddomäne in jeder Ebene senkrecht zu der Schwenkachse keilförmig mit dem gleichen Keilwinkel. Durch diese optionale Bedingung, ändert sich der Keilwinkel über alle Ebenen senkrecht zur Schwenkachse nicht.

Die Vorrichtung zur Konversion von elektromagnetischer Eingangsstrahlung umfasst Kristalle für alle Arten der nichtlinearen Wechselwirkung. Daher ist die Erfindung nicht auf Ausführungsformen mit einer einzigen elektromagnetischen Eingangsstrahlung und einer einzigen elektromagnetischen Ausgangsstrahlung beschränkt. Beispiele für nichtlinear-optische Effekte in dem nichtlinear-optischen Kristall im Sinne der vorliegenden Anmeldung sind Frequenzverdopplung, Summenfrequenzerzeugung, Differenzfrequenzerzeugung, ein parametrischer Prozess (auch Abwärtskonversion genannt), Selbstfokussierung und Kerreffekt, Selbstphasenmodulation und Vier-Wellen-Mischen.

Der Kristallhalter ist ein mechanisches Bauteil, welches zum Aufnehmen des nichtlinear-optischen Kristalls geeignet ist und welches die Möglichkeit bereitstellt, mit dem Kristall um eine definierte Schwenkachse verschwenkt zu werden. Für die Realisierung der vorliegenden Erfindung ist es dabei unerheblich, wie der Kristall an dem Kristallhalter aufgenommen wird. Möglich ist eine stoffschlüssige Verbindung, zum Beispiel durch Kleben, oder eine kraftschlüssige Verbindung, zum Beispiel mit Hilfe einer Pratze oder Klemme, oder eine formschlüssige Verbindung.

Als Länge des Kristalls oder einer Domäne wird ihre Erstreckung in der Längenrichtung bezeichnet. Die Längenrichtung ist senkrecht zu einer Grenzfläche zwischen einer ersten Domäne und einer zweiten Domäne. Die Dicke bezeichnet die Erstreckung des Kristalls in einer Dickenrichtung, wobei die Dickenrichtung in einer Ausführungsform senkrecht zu der Längenrichtung und parallel zu der Schwenkachse ist. Die Dickenrichtung fällt zudem in einer Ausführungsform mit der Orientierung der spontanen Polarisierung der Domänen des Kristalls zusammen. Die Breite des Kristalls bezeichnet seine Erstreckung in einer Breitenrichtung senkrecht zu der Längenrichtung und senkrecht zu der Dickenrichtung.

In einer Ausführungsform der Erfindung ist der nichtlinear-optische Kristall aus Lithiumniobat, Lithiumtantalat, Kaliumtitanylphosphat (KTP) oder Bariummagnesiumfluorid hergestellt.

Grundsätzlich ist die erfindungsgemäße Vorrichtung geeignet für nichtlinear-optische Kristalle, welche nur genau eine erste Domäne und die Enddomäne aufweisen, d.h. einen Kristall mit genau zwei Domänen. Dabei weisen die erste Domäne und die Enddomäne voneinander abweichende Orientierungen der spontanen Polarisation auf.

Strukturen in nichtlinear-optischen Kristallen für die Quasi-Phasenanpassung weisen jedoch überwiegend eine Vielzahl von Domänen auf, wobei abwechselnd Domänen mit voneinander verschiedener spontaner Polarisierung vorgesehen sind. Die Enddomäne ist dann eine aus einer Mehrzahl von zweiten Domänen, wobei die zweiten Domänen die zweite Orientierung aufweisen und wobei die erste Orientierung und die zweite Orientierung voneinander verschieden sind.

In einer Ausführungsform der Erfindung weist der Kristall eine Mehrzahl von ersten Domänen und eine Mehrzahl von zweiten Domänen auf, wobei die spontane Polarisierung des Kristalls in der Mehrzahl von ersten Domänen eine erste Orientierung und in der Mehrzahl von zweiten Domänen eine zweite Orientierung aufweist, wobei die erste Orientierung und die zweite Orientierung voneinander verschieden sind, wobei die ersten Domänen und die zweiten Domänen abwechselnd angeordnet sind und wobei die Enddomäne eine aus der Mehrzahl von zweiten Domänen ist.

In einer Ausführungsform ist eine solche Anordnung einer Mehrzahl von ersten und zweiten Domänen periodisch, d.h. in Richtung der durch den Kristall propagierende Eingangsstrahlung haben die aufeinanderfolgenden Domänen mit voneinander verschiedener spontaner Polarisierung die gleiche Länge in der Längenrichtung. Allerdings sind auch Ausführungsformen mit einer aperiodischen Anordnung einer Mehrzahl von ersten und zweiten Domänen möglich. Dabei ist zu berücksichtigen, dass die Enddomäne aufgrund ihrer Keilform immer zumindest abschnittsweise eine andere Länge in der Längenrichtung aufweist als die übrigen Domänen. Auch die allererste Domäne, welche von der ersten Endfacette begrenzt ist, hat typischerweise herstellungsbedingt eine andere Länge in der Längenrichtung als die übrigen ersten und zweiten Domänen.

Die ersten und zweiten Domänen, einschließlich der Enddomäne, des Kristalls werden häufig auch als erste und zweite Volumensegmente bezeichnet. Eine Domäne ist ein zusammenhängendes Volumensegment des Kristalls, über welches hinweg die spontane Polarisierung des Kristalls die gleiche Orientierung aufweist.

In einer Ausführungsform der Erfindung weist der Kristall eine optische Achse auf, wobei der Kristall derart an dem Kristallhalter aufgenommen ist, dass die Schwenkachse parallel zu der optischen Achse ist.

In einer Ausführungsform der Erfindung sind die erste Endfacette und die zweite Endfacette parallel zu der Schwenkachse. In einer alternativen Ausführungsform ist zumindest die erste Endfacette oder die zweite Endfacette gegenüber der Schwenkachse verkippt. Dies ermöglicht es, Rückreflexe von den Endfacetten zurück in eine Strahlungsquelle der Eingangsstrahlung zu vermeiden.

In einer Ausführungsform der Erfindung sind die erste Endfacette und die zweite Endfacette parallel zu der optischen Achse des Kristalls.

In einer Ausführungsform der Erfindung ist der Kristall derart an dem Kristallhalter aufgenommen, dass die Schwenkachse in einer Ebene der ersten Endfacette liegt oder die Ebene der ersten Endfacette schneidet.

In einer weiteren Ausführungsform weist der Kristall eine optische Achse auf, wobei der Kristall eine Breite senkrecht zu der optischen Achse aufweist, wobei die Schwenkachse derart angeordnet ist, dass sie die Breite hälftig teilt.

In einer Ausführungsform der Erfindung umfasst die Vorrichtung einen Laser, wobei der Laser derart ausgestaltet ist, dass der Laser in dem Betrieb der Vorrichtung die Eingangsstrahlung erzeugt. In einer Ausführungsform umfasst zudem der Einkoppler ein fokussierendes Element, wobei das fokussierende Element derart ausgestaltet und angeordnet ist, dass das fokussierende Element in dem Betrieb der Vorrichtung einen Fokus der Eingangsstrahlung innerhalb des Kristalls generiert, und wobei der Keilwinkel 0, gleich oder kleiner ist als ein maximaler Keilwinkel $\Theta_{max}$, wobei der maximale Keilwinkel $\Theta_{max}$ gegeben ist als

$$\Theta_{max} = 0{,}2 \cdot \frac{l_c}{w_0},$$

wobei $l_c$ die Länge einer Mehrzahl der ersten und zweiten Domänen und $w_0$ der von dem fokussierenden Element im Fokus erzeugte Strahlradius ist.

Der so gegebene maximale Keilwinkel $\Theta_{max}$ berücksichtigt, dass die Strahlung über den Strahlradius hinweg eine in etwa konstante optische Weglänge innerhalb der Enddomäne erfahren muss.

Dabei ist der Strahlradius gegeben durch den $1/e^2$ Abfall der Intensität der Eingangsstrahlung. Typischerweise beträgt der Strahlradius 100 $\mu$m.

In einer Ausführungsform ist der Keilwinkel 0 so gewählt, dass er größer oder gleich einem minimalen Keilwinkel $\Theta_{min}$ ist. Dabei ist der minimale Keilwinkel $\Theta_{min}$ gegeben durch

$$\Theta_{min} = \tan^{-1}\frac{l_c}{b},$$

wobei b die Breite des Kristalls ist.

Der minimale Keilwinkel $\Theta_{min}$ berücksichtigt in einer solchen Ausführungsform, dass die optische Weglänge des Kristalls um die Kohärenzlänge bzw. Länge einer ersten oder zweiten Domäne über die Kristallbreite b änderbar sein soll.

Der Rückreflektor ist in einer Ausführungsform ein Spiegel, insbesondere ein fokussierender Hohlspiegel. In einer Ausführungsform der Erfindung ist der Rückreflektor ein Hohlspiegel, wobei der Hohlspiegel derart ausgestaltet und angeordnet ist, dass der Hohlspiegel in dem Betrieb der Vorrichtung einen Fokus der Eingangsstrahlung innerhalb des Kristalls generiert.

Ein Einkoppler ist ein optisches Element, welches den Strahlengang der elektromagnetischen Eingangsstrahlung so formt und/oder leitet, dass die elektromagnetische Eingangsstrahlung durch die erste Endfacette in den Kristall eintritt und durch die zweite Endfacette aus dem Kristall austritt. In einer Ausführungsform der Erfindung umfasst der Einkoppler zumindest ein Element aus einem Reflektor, beispielsweise einem Spiegel, und einem fokussierenden Element, beispielsweise einer Linse. In einer Ausführungsform umfasst der Einkoppler einen fokussierenden Spiegel.

In einer Ausführungsform der Erfindung umfasst der Einkoppler ein fokussierendes Element, wobei das fokussierende Element derart ausgestaltet und angeordnet ist, dass das fokussierende Element in dem Betrieb der Vorrichtung einen Fokus der Eingangsstrahlung innerhalb des Kristalls generiert.

In einer weiteren Ausführungsform umfasst der Einkoppler ein reflektierendes Element, wobei das reflektierende Element derart ausgestaltet und angeordnet ist, dass das reflektierende Element in dem Betrieb der Vorrichtung die Eingangsstrahlung auf die erste Endfacette ablenkt.

In einer Ausführungsform der Erfindung weist die Vorrichtung einen Auskoppler auf, wobei der Auskoppler zumindest ein fokussierendes Element oder ein reflektierendes Element umfasst, sodass der Auskoppler in dem Betrieb der Vorrichtung die Ausgangsstrahlung zumindest ablenkt oder fokussiert. In einer Ausführungsform der Erfindung ist der Auskoppler ein Kollimator, der die von dem Rückreflektor in den Kristall fokussierte Ausgangsstrahlung kollimiert.

In einer Ausführungsform der Erfindung sind der Einkoppler und der Rückkoppler derart ausgestaltet und angeordnet, dass weder die Eingangsstrahlung noch die Ausgangsstrahlung mit der ersten Endfacette einen rechten Winkel bilden. Dies gilt in einer Ausführungsform für alle Schwenkpositionen des Kristallhalters um die Schwenkachse.

In einer Ausführungsform der Erfindung sind der Einkoppler und der Rückkoppler derart ausgestaltet und angeordnet, dass eine Strahlachse der Eingangsstrahlung in Strahlrichtung zwischen dem Einkoppler und dem Rückkoppler und eine Strahlachse der Eingangsstrahlung in Strahlrichtung zwischen dem Rückkoppler und der ersten Endfacette einen von null Grad verschiedenen Winkel einschließen. Auf diese Weise wird eine einfachere geometrische Auftrennung zwischen den Strahlengängen möglich. Zudem lassen sich Rückreflexionen in die Strahlungsquelle der Eingangsstrahlung vermeiden. In einer Ausführungsform schließen zudem die Strahlachse der Eingangsstrahlung in Strahlrichtung zwischen dem Einkoppler und dem Rückkoppler und die Strahlachse der Eingangsstrahlung in Strahlrichtung zwischen dem Rückkoppler und der ersten Endfacette mit einer Grenzfläche zwischen der ersten Domäne und der Enddomäne unabhängig von der Schwenkposition des Kristallhalters um die Schwenkachse jeweils einen von 90 Grad verschiedenen Winkel ein.

In einer Ausführungsform der Erfindung umfasst der Kristallhalter eine Trägerplatte und eine Grundplatte, wobei der Kristall auf der Trägerplatte montiert ist, wobei die Grundplatte und die Trägerplatte einen Zapfen und eine zu dem Zapfen komplementäre Buchse aufweisen, wobei der Zapfen in die Buchse eingreift, sodass die Trägerplatte gegenüber der Grundplatte um den Zapfen schwenkbar ist. Eine solche Anordnung ist mechanisch einfach realisierbar und der Kristall mit der Trägerplatte kann in einer optimierten Position einfach fixiert werden.

In einer Ausführungsform der Erfindung weist die Trägerplatte mindestens zwei Langlöcher auf, wobei in der Grundplatte mindestens zwei Innengewinde vorgesehen sind, wobei durch jedes der mindestens zwei Langlöcher eine in einem der mindestens zwei Innengewinde aufgenommene Schraube hindurchgreift, welche die Trägerplatte gegenüber der Grundplatte fixiert und wobei die mindestens zwei Langlöcher derart ausgestaltet und angeordnet sind, dass dann, wenn die Schrauben gelöst sind, die Trägerplatte um den Zapfen gegenüber der Grundplatte schwenkbar ist.

Die zuvor genannte Aufgabe wird auch durch das erfindungsgemäße Verfahren gemäß dem darauf gerichteten unabhängigen Anspruch gelöst. Dazu weist das Verfahren der eingangs genannten Art weiterhin den Schritt auf: Schwenken des Kristalls um eine Schwenkachse, wobei die Enddomäne in zumindest einer Ebene senkrecht zu der Schwenkachse keilförmig mit dem Keilwinkel (Theta) ist.

Soweit zuvor Aspekte der Erfindung im Hinblick auf die Vorrichtung beschrieben wurden, so gelten diese auch für das entsprechende Verfahren zum Einstellen der Konversionseffizienz und umgekehrt. Soweit das Verfahren mit einer Vorrichtung gemäß dieser Erfindung ausgeführt wird, so weist diese die entsprechenden Einrichtungen hierfür auf. Insbesondere sind die hierin beschriebenen Ausführungsformen der Vorrichtung zum Ausführen der hierin beschriebenen Ausführungsformen des Verfahrens geeignet.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Figur 1    ist eine schematische Draufsicht auf eine Ausführungsform der erfindungsgemäßen Vorrichtung.

Figur 2    ist eine schematische Draufsicht auf eine Ausführungsform einer Kristallhalterung für die erfindungsmäße Vorrichtung.

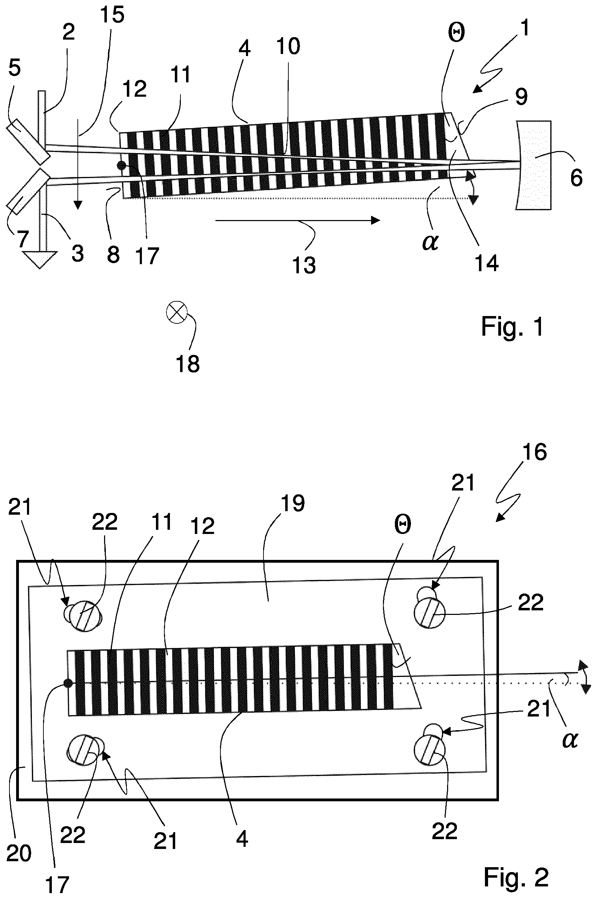

Figur 1 zeigt eine Ausführungsform der erfindungsgemäßen Vorrichtung anhand derer nachfolgend auch das erfindungsgemäße Verfahren zum Ändern einer Konversionseffizienz der Konversion von elektromagnetischer Eingangsstrahlung 2 in elektromagnetische Ausgangsstrahlung 3 beschrieben wird.

In der gezeigten Ausführungsform dient ein nichtlinear-optischer Kristall 4 der Erzeugung der zweiten Harmonischen der Eingangsstrahlung 2, wobei die Eingangsstrahlung 2 eine erste Frequenz aufweist. Die elektromagnetische Strahlung 3 mit der doppelten Frequenz der ersten Frequenz wird in der vorliegenden Anmeldung als Ausgangsstrahlung bezeichnet und hat die zweite Frequenz.

Die Vorrichtung 1 umfasst neben dem nichtlinear-optischen Kristall 4, einen Einkoppler in Form eines Hohlspiegels 5, einen Rückreflektor 6 sowie einen Auskoppler 7.

Der nichtlinear-optische Kristall 4 weist eine erste Endfacette 8 und eine zweite Endfacette 9 auf, durch welche die Eingangsstrahlung und die Ausgangsstrahlung in den Kristall 4 ein- bzw. ausgekoppelt werden.

Ein Laser (in den Figuren nicht gezeigt) in dem Betrieb erzeugt die Eingangsstrahlung 2 mit einer Wellenlänge von 1550 nm. Der Hohlspiegel 5 fokussiert die Eingangsstrahlung 2 durch die erste Endfacette 8 in den Kristall, so dass ein Fokus 10 innerhalb des Kristalls 4 generiert wird.

Der Kristall 4 besteht aus Lithiumniobat, wobei der Kristall eine Mehrzahl von ersten Domänen 11 und eine Mehrzahl von zweiten Domänen 12 aufweist. Die spontane Polarisierung des Kristalls in der Mehrzahl von ersten Domänen 11 weist eine erste Orientierung und die Mehrzahl von zweiten Domänen 12 weist eine zweite, der ersten Orientierung entgegengesetzte Orientierung auf. Die ersten Domänen 11 und die zweiten Domänen 12 sind abwechselnd angeordnet und periodisch angeordnet. Die periodische Anordnung bedeutet, dass die ersten und zweiten Domänen in der Längenrichtung 13 des Kristalls 4 jeweils die gleiche Länge $l_c$ aufweisen. Ausgenommen von dieser strengen Periodizität sind die erste aus Mehrzahl von zweiten Domänen 12, welche von der ersten Endfacette 8 begrenzt wird sowie die Enddomäne 14, welche von der zweiten Endfacette 9 begrenzt wird. Die von der ersten Endfacette 8 begrenzte zweite Domäne weist herstellungsbedingt eine geringere Länge auf als die weiteren Domänen. Die Enddomäne 14 hingegen ist erfindungsgemäß keilförmig ausgestaltet, so dass ihre Länge in der Längenrichtung 13 über die Breite des Kristalls in der Breitenrichtung 15 variiert.

Diese Mehrzahl von ersten und zweiten Domänen 11, 12 mit einander entgegengesetzter Orientierung der spontanen Polarisierung des Kristalls ermöglicht eine Quasi-Phasenanpassung. Die Phasen der erzeugten Elementarwellen der Ausgangsstrahlung aus einer der ersten Domänen 11 erfahren einen Phasensprung gegenüber erzeugten Elementarwellen aus einer der ersten Domänen 12. So werden die elektromagnetischen Felder der Ausgangsstrahlung 3 über die Länge des Kristalls 4 hinweg konstruktiv aufsummiert.

Um die Effizienz der Frequenzkonversion in der Vorrichtung 1 weiter zu steigern, werden die Eingangsstrahlung 2 und die Ausgangsstrahlung 3 zweifach durch Kristall 4 geführt. Zu diesem Zweck fokussiert der Hohlspiegel 6 als Rückreflektor sowohl die noch nicht konvertierte Eingangsstrahlung 2 als auch die bei dem ersten Durchdang durch den Kristall 4 generierte Ausgangsstrahlung 3 zurück in den Kristall 4. Auch der von dem Hohlspiegel 6 generierte Fokus liegt in dem Kristall 4.

Auch bei dem zweiten Durchgang der Strahlung 2, 3 durch den Kristall 4 müssen sich die generierten elektromagnetischen Felder der Ausgangsstrahlung 3 wieder konstruktiv aufsummieren. Allerdings weisen der Rückreflektor 6, die Luft zwischen Kristall 4 und Rückreflektor 6 und der Kristall 4 selbst Dispersionen auf, welche die im zweiten Durchgang generierten Elementarwellen der Ausgangsstrahlung 3 außer Phase zu den im ersten Durchgang generierten Elementarwellen der Ausgangsstrahlung 3 bringen.

Um diesen Phasenversatz zwischen Hin- und Rückweg einstellbar zu kompensieren, ist der Kristall 4 auf seiner zu dem Rückreflektor 6 hinzeigenden Seite mit der keilförmigen Enddomäne 14 versehen. Ferner umfasst der Kristallhalter 16 eine Schwenkachse 17, um welche der Kristall 4 schwenkbar ist. Dabei weist in der gezeigten Ausführungsform der von der Enddomäne gebildete Keil in allen Ebenen senkrecht zu der Schwenkachse 17 den gleichen Keilwinkel 0 auf.

Durch Schwenken des Kristalls 4 um die Schwenkachse 17 wird die optische Weglänge der elektromagnetischen Strahlung 2, 3 in der Enddomäne 14 eingestellt. Dabei ist der optimale Schwenkwinkel a derjenige Winkel, bei dem die auf dem Hinweg und auf dem Rückweg generierten Elementarwellen der elektromagnetischen Ausgangsstrahlung 3 in Phase sind.

Der Kristall 4 weist eine optische Achse auf, wobei der Kristall 4 derart an dem Kristallhalter 16 aufgenommen ist, dass die Schwenkachse 17 parallel zu der optischen Achse ist. Die optische Achse und damit die Schwenkachse 17 erstrecken sich in der gezeigten Ausführungsform in der Dickenrichtung 18 des Kristalls 4. Zudem sind die erste Endfacette 8 und die zweite Endfacette 9 parallel zu der Schwenkachse 17. Zudem sind der Einkoppler 5 und der Rücckoppler 6 derart ausgestaltet und angeordnet, dass die Eingangsstrahlung 2 sowie die Ausgangsstrahlung 3 bei keinem Schwenkwinkel $\alpha$ senkrecht zu der ersten Endfacetten 8 oder der zweiten Endfacette 9 des Kristalls 4 sind. Auf diese Weise werden Rückreflexe von den Endfacetten 8, 9 zurück in Laser vermieden.

In der dargestellten Ausführungsform sind zudem der Einkoppler 5 und der Rücckoppler 6 positioniert und justiert, dass die Strahlachse der Eingangsstrahlung 2 in Strahlrichtung zwischen dem Einkoppler 5 und dem Rücckoppler 6 und die Strahlachse der Eingangsstrahlung 2 in Strahlrichtung zwischen dem Rückkoppler 6 und dem Auskoppler 7 einen Winkel von etwa 1,5 Grad einschließen.

In der gezeigten Ausführungsform beträgt der Keilwinkel 0 1 Grad. Dies ermöglicht es, den Kristall 4 bei einem von dem Einkoppler 5 im Fokus 10 der Eingangsstrahlung 2 im Kristall 4 erzeugten Strahlradius $w_0$ von 100 Mikrometern und einer Länge $l_c$ einer Mehrzahl der ersten und zweiten Domänen von 10 Mikrometern den Kristall mit einer Breite b in der Breitenrichtung 15 von nur 5 mm zu versehen.

Der Auskoppler 7 kompensiert die Fokussierung durch den Rückreflektor 6 und kollimiert die Ausgangsstrahlung 3.

Figur 2 zeigt schematisch einen Aufbau des Kristallhalters 16. Der Kristallhalter 16 umfasst eine Trägerplatte 19 und eine Grundplatte 20. Auf die Trägerplatte 19 ist der Kristall 4 aufgeklebt. Die Trägerplatte 19 ist gegenüber der Grundplatte 20 um einen die Schwenkachse 17 bildenden Zapfen, der in eine zu dem Zapfen komplementäre Buchse eingreift, schwenkbar.

Die Vorrichtung 1 wird nach der Montage der einzelnen Elemente so justiert, dass die Ausgangsleistung der Ausgangsstrahlung 3 maximal ist. Dazu wird die Trägerplatte 19 gegenüber der Grundplatte 20 verschwenkt. Nachdem das Maximum der Leistung der Ausgangsstrahlung 3 eingestellt ist, werden vier durch Langlöcher 21 in der Trägerplatte 19 in die Grundplatte 20 eingreifende Schrauben 22 festgezogen. Dabei sind die Langlöcher 21 derart bemessen, dass sie die Trägerplatte 19 gegenüber den Schrauben 22 führen, aber dennoch eine definierte Schwenkbewegung der Trägerplatte 19 gegenüber der Grundlatte 20 um die Schwenkachse 17 ermöglichen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Bezugszeichenliste

| | |
|---|---|
| 1 | Vorrichtung |
| 2 | Eingangsstrahlung |
| 3 | Ausgangsstrahlung |
| 4 | nichtlinear-optischer Kristall |
| 5 | Einkoppler |
| 6 | Rückreflektor |
| 7 | Auskoppler |
| 8 | erste Endfacette |
| 9 | zweite Endfacette |
| 10 | Fokus |
| 11 | erste Domäne |
| 12 | zweite Domäne |
| 13 | Längenrichtung |
| 14 | Enddomäne |
| 15 | Breitenrichtung |
| 16 | Kristallhalter |
| 17 | Schwenkachse |
| 18 | Dickenrichtung |
| 19 | Trägerplatte |
| 20 | Grundplatte |
| 21 | Langloch |
| 22 | Schraube |

## Patentansprüche

**1.** Vorrichtung (1) zur Konversion von elektromagnetischer Eingangsstrahlung (2) mit einer ersten Frequenz in elektromagnetische Ausgangsstrahlung (3) mit einer von der ersten Frequenz verschiedenen zweiten Frequenz, wobei die Vorrichtung (1) aufweist

einen Einkoppler (5),
einen Kristallhalter (16),
einen an dem Kristallhalter (16) aufgenommenen nichtlinear-optischen Kristall (4),

wobei der nichtlinear-optische Kristall (4) eine erste Domäne (11) und eine Enddomäne (14) aufweist, wobei die spontane Polarisierung des Kristalls (4) in der ersten Domäne (11) eine erste Orientierung und in der Enddomäne (14) eine zweite Orientierung aufweist, wobei die erste Orientierung und die zweite Orientierung voneinander verschieden sind, und

wobei der Kristall (4) eine erste Endfacette (8) und eine zweite Endfacette (9) aufweist, wobei die Enddomäne (14) von der zweiten Endfacette (9) begrenzt ist und wobei die Enddomäne (14) keilförmig mit einem Keilwinkel (0) ausgebildet ist, und

einen Rückreflektor (6),

wobei der Einkoppler (5) derart ausgestaltet und angeordnet ist, dass in einem Betrieb der Vorrichtung (1) die Eingangsstrahlung (2) von dem Einkoppler (5) durch die erste Endfacette (8) in den Kristall (4) eingestrahlt wird, so dass die Eingangsstrahlung (2) durch den Kristall (4) transmittiert wird und durch die zweite Endfacette (9) aus dem Kristall (4) austritt,

wobei der Kristall (4) derart ausgestaltet und angeordnet ist, dass ein Anteil der Eingangsstrahlung (2) in dem Betrieb der Vorrichtung (1) in die Ausgangsstrahlung umgewandelt wird,

wobei der Rückreflektor (6) derart ausgestaltet und angeordnet ist, dass der Rückreflektor (6) in dem Betrieb der Vorrichtung die aus dem Kristall (4) durch die zweite Endfacette (9) austretende Eingangsstrahlung (2) und die aus dem Kristall (4) durch die zweite Endfacette (9) austretende Ausgangsstrahlung (3) durch die zweite Endfacette in den Kristall (4) zurückreflektiert, so dass die Eingangsstrahlung (2) und die Ausgangsstrahlung (3) durch den Kristall (4) transmittiert werden und durch die erste Endfacette (8) aus dem Kristall (4) austreten,

**dadurch gekennzeichnet, dass**

der Kristallhalter (16) derart ausgestaltet ist, dass der Kristallhalter (16) mit dem Kristall (4) um eine Schwenkachse (17) schwenkbar ist und die Enddomäne (14) in zumindest einer Ebene senkrecht zu der Schwenkachse (17) keilförmig mit dem Keilwinkel (0) ist.

2. Vorrichtung (1) nach dem vorhergehenden Anspruch, wobei der Kristall (4) eine optische Achse aufweist und wobei der Kristall (4) derart an dem Kristallhalter (16) aufgenommen ist, dass die Schwenkachse (17) parallel zu der optischen Achse ist.

3. Vorrichtung (1) nach einem der vorhergehenden Ansprüche, wobei der Kristall (4) derart an dem Kristallhalter (16) aufgenommen ist, dass die Schwenkachse (17) in einer Ebene der ersten Endfacette (8) liegt oder die Ebene der ersten Endfacette (8) schneidet.

4. Vorrichtung (1) nach einem der vorhergehenden Ansprüche, wobei der Kristall (4) eine optische Achse aufweist und wobei der Kristall (4) eine Breite (b) senkrecht zu der optischen Achse aufweist, wobei die Schwenkachse (17) derart angeordnet ist, dass sie die Breite (b) hälftig teilt.

5. Vorrichtung nach einem der vorhergehenden Ansprüche, wobei die Enddomäne (14) in jeder Ebene senkrecht zu der Schwenkachse (17) keilförmig mit dem Keilwinkel (0) ist.

6. Vorrichtung (1) nach einem der vorhergehenden Ansprüche, wobei der Kristall (4) eine Mehrzahl von ersten Domänen (11) und eine Mehrzahl von zweiten Domänen (12) aufweist, wobei die spontane Polarisierung des Kristalls (4) in der Mehrzahl von ersten Domänen (11) eine erste Orientierung und in der Mehrzahl von zweiten Domänen (12) eine zweite Orientierung aufweist, wobei die erste Orientierung und die zweite Orientierung voneinander verschieden sind, wobei die ersten Domänen (11) und die zweiten Domänen (12) abwechselnd angeordnet sind und wobei die Enddomäne eine aus der Mehrzahl von zweiten Domänen (12) ist.

7. Vorrichtung (1) nach dem vorhergehenden Anspruch,

wobei die Vorrichtung einen Laser aufweist, wobei der Laser derart ausgestaltet ist, dass der Laser in dem Betrieb der Vorrichtung (1) die Eingangsstrahlung (2) erzeugt, wobei der Einkoppler (5) ein fokussierendes Element umfasst, wobei das fokussierende Element derart ausgestaltet und angeordnet ist, dass das fokussierende Element in dem Betrieb der Vorrichtung (1) einen Fokus (10) der Eingangsstrahlung (2) innerhalb des Kristalls (4) generiert, und wobei der Keilwinkel (0) gleich oder kleiner ist als ein maximaler Keilwinkel ($\Theta_{max}$), wobei der maximale Keilwinkel gegeben ist als

$$\Theta_{max} = 0{,}2 \cdot \frac{l_c}{w_0},$$

wobei $l_c$ die Länge einer Mehrzahl der ersten und zweiten Domänen (11, 12) und $w_0$ der von dem fokussierenden Element im Fokus (10) erzeugte Strahlradius ist.

8. Vorrichtung (1) nach Anspruch 6 oder 7, wobei der Keilwinkel (0) gleich oder größer als ein minimaler Keilwinkel ($\Theta_{min}$) ist, wobei der minimale Keilwinkel ($\Theta_{min}$) gegeben ist als

$$\Theta_{min} = \tan^{-1}\frac{l_c}{b},$$

wobei $l_c$ die Länge einer aus der Mehrzahl von ersten und zweiten Domänen und $b$ die Breite des Kristalls ist.

9. Vorrichtung (1) nach einem der vorhergehenden Ansprüche, wobei der Einkoppler (5) ein fokussierendes Element umfasst, wobei das fokussierende Element derart ausgestaltet und angeordnet ist, dass das fokussierende Element in dem Betrieb der Vorrichtung (1) einen Fokus (10) der Eingangsstrahlung (2) innerhalb des Kristalls (4) generiert.

10. Vorrichtung (1) nach einem der vorhergehenden Ansprüche, wobei der Einkoppler (5) ein reflektierendes Element umfasst, wobei das reflektierende Element derart ausgestaltet und angeordnet ist, dass das reflektierende Element in dem Betrieb der Vorrichtung (1) die Eingangsstrahlung (2) auf die erste Endfacette (8) ablenkt.

11. Vorrichtung (1) nach einem der vorhergehenden Ansprüche, wobei die Vorrichtung (1) einen Auskoppler (7) aufweist, wobei der Auskoppler (7) zumindest ein fokussierendes Element oder ein reflektierendes Element umfasst, so dass der Auskoppler (7) in dem Betrieb der Vorrichtung (1) die Ausgangsstrahlung (3) zumindest ablenkt oder fokussiert.

12. Vorrichtung (1) nach einem der vorhergehenden Ansprüche, wobei der Einkoppler (5) und der Rückreflektor (6) derart ausgestaltet und angeordnet sind, dass weder die Eingangsstrahlung (2) noch die Ausgangsstrahlung (3) mit den ersten und zweiten Endfacetten (8, 9) einen rechten Winkel bilden.

13. Vorrichtung (1) nach einem der vorhergehenden Ansprüche, wobei der Kristallhalter (16) eine Trägerplatte (19) und eine Grundplatte (20) umfasst,

    wobei der Kristall auf der Trägerplatte (19) montiert ist,
    wobei die Grundplatte (20) und die Trägerplatte (19) einen Zapfen und eine zu dem Zapfen komplementäre Buchse aufweisen,
    wobei der Zapfen in die Buchse eingreift, so dass die Trägerplatte (19) gegenüber der Grundplatte (20) um den Zapfen schwenkbar ist.

14. Vorrichtung (1) nach dem vorhergehenden Anspruch, wobei

    wobei die Trägerplatte (19) mindestens zwei Langlöcher (21) aufweist,
    wobei in der Grundplatte (20) mindestens zwei Innengewinde vorgesehen sind,
    wobei durch jedes der mindestens zwei Langlöcher (21) eine in einem der mindestens zwei Innengewinde aufgenommene Schraube (22) hindurchgreift, welche die Trägerplatte (19) gegenüber der Grundplatte (20) fixiert, und
    wobei die mindestens zwei Langlöcher derart ausgestaltet und angeordnet sind, dass dann, wenn die Schrauben gelöst sind, die Trägerplatte (19) um den Zapfen gegenüber der Grundplatte schwenkbar ist.

15. Verfahren zum Einstellen einer Konversionseffizienz von elektromagnetischer Eingangsstrahlung (2) mit einer ersten Frequenz in elektromagnetische Ausgangsstrahlung (3) mit einer vor der ersten Frequenz verschiedenen zweiten Frequenz in einem nichtlinear-optischen Kristall (4),

    wobei der nichtlinear-optische Kristall (4) eine erste Domäne (11) und eine Enddomäne (14) aufweist, wobei die spontane Polarisierung des Kristalls (4) in der ersten Domäne (11) eine erste Orientierung und in der Enddomäne (14) eine zweite Orientierung aufweist, wobei die erste Orientierung und die zweite Orientierung voneinander verschieden sind, und
    wobei der Kristall (4) eine erste Endfacette (8) und eine zweite Endfacette (9) aufweist, wobei die Enddomäne (14) von der zweiten Endfacette (9) begrenzt ist und wobei die Enddomäne (14) keilförmig mit einem Keilwinkel (0) ausgebildet ist und

    wobei das Verfahren die Schritte aufweist

    Einkoppeln der Eingangsstrahlung (2) in den Kristall (4), so dass die Eingangsstrahlung (2) durch die erste Endfacette (8) in den Kristall (4) eingestrahlt wird, die Eingangsstrahlung (2) durch den Kristall (4) transmittiert wird und durch die zweite Endfacette (9) aus dem Kristall (4) austritt,
    Umwandeln eines Anteils der Eingangsstrahlung (2) in die Ausgangsstrahlung (3) und
    Zurückreflektieren der aus dem Kristall (4) durch die zweite Endfacette (9) austretenden Eingangsstrahlung (2) und Ausgangsstrahlung (3) durch die zweite Endfacette (9) in den Kristall (4), so dass die Eingangsstrahlung (2) und die Ausgangsstrahlung (3) durch den Kristall (4) transmittiert werden und durch die erste Endfacette (8) aus dem Kristall (4) austreten,

    **dadurch gekennzeichnet, dass** Verfahren weiterhin den Schritt aufweist
    Schwenken des Kristalls (4) um eine Schwenkachse, wobei die Enddomäne (14) in zumindest einer Ebene senkrecht zu der Schwenkachse (17) keilförmig mit dem Keilwinkel (0) ist.

Fig. 1

Fig. 2

**Europäisches Patentamt**
**European Patent Office**
**Office européen des brevets**

# EUROPÄISCHER RECHERCHENBERICHT

**Nummer der Anmeldung**

EP 23 18 1272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/262779 A1 (RAYBAUT MYRIAM [FR] ET AL) 18. Oktober 2012 (2012-10-18) | 1-12,15 | INV.<br>G02F1/35 |
| A | * Abbildungen 4, 5, 7, 8 *<br>* Absätze [0002], [0037], [0038], [0041] *<br>* Anspruch 1 *<br>----- | 13,14 | G02F1/355 |

**RECHERCHIERTE SACHGEBIETE (IPC)**

G02F

Der vorliegende Recherchenbericht wurde für alle Patentansprüche erstellt

| Recherchenort | Abschlußdatum der Recherche | Prüfer |
|---|---|---|
| Den Haag | 24. November 2023 | Topak, Eray |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 18 1272

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-11-2023

| Im Recherchenbericht angeführtes Patentdokument | Datum der Veröffentlichung | Mitglied(er) der Patentfamilie | | Datum der Veröffentlichung |
|---|---|---|---|---|
| US 2012262779 A1 | 18-10-2012 | CN | 102854696 A | 02-01-2013 |
| | | EP | 2503387 A1 | 26-09-2012 |
| | | FR | 2973120 A1 | 28-09-2012 |
| | | JP | 5846603 B2 | 20-01-2016 |
| | | JP | 2012212139 A | 01-11-2012 |
| | | US | 2012262779 A1 | 18-10-2012 |

EPO FORM P0461

Für nähere Einzelheiten zu diesem Anhang : siehe Amtsblatt des Europäischen Patentamts, Nr.12/82